# EUROPÄISCHE PATENTANMELDUNG

(11) **EP 2 500 206 A2**
(43) Veröffentlichungstag der Anmeldung: **19.09.2012**
(21) Anmeldenummer: 12152393.0
(22) Anmeldetag: 25.01.2012
(51) Int. Cl.: B60L 11/18, H02J 7/00

(54) **Elektrischer Energiespeicher für Fahrzeug mit elektrischem Antrieb**

(30) Priorität: 17.02.2011 DE 102011011621; 14.03.2011 DE 102011013836
(71) Anmelder: STILL GmbH, 22113 Hamburg (DE)
(72) Erfinder: Wilhöft, Adolf, 22885 Barsbüttel (DE); Kwiatkowski, Dr., Andreas, 22083 Hamburg (DE); Rudolph, Dr., Christian, 21075 Hamburg (DE); Osper, Gerald, 22147 Hamburg (DE)
(74) Vertreter: Geirhos, Johann

(57) **Zusammenfassung**

Bei einem elektrischer Energiespeicher für ein Fahrzeug mit zumindest auch elektrischem Antrieb, insbesondere Hybridantrieb, wobei der elektrische Energiespeicher (17) eine Mehrzahl von Ultrakondensatoren (35) aufweist, weist der elektrische Energiespeicher (17) ein Schütz (28) bzw. Schalter auf, der über eine Steuerleitung (38, 39) und/oder ein Steuersignal geschaltet werden kann und zumindest einen der Leistungsanschlüsse (34) des elektrischen Energiespeichers (17) trennen kann.

## Beschreibung

Die Erfindung betrifft einen elektrischer Energiespeicher für ein Fahrzeug mit zumindest einem elektrischen Antrieb. Insbesondere betrifft die Erfindung einen elektrischer Energiespeicher für ein Fahrzeug mit zumindest auch elektrischem Antrieb, beispielsweise einen Hybridantrieb, wobei der elektrische Energiespeicher eine Mehrzahl von Ultrakondensatoren aufweist.

Bekannt sind als Flurförderzeuge, insbesondere Gegengewichtsgabelstapler, ausgebildete mobile Arbeitsmaschinen, die mit einem batterie-elektrisch betriebenen Antriebssystem, auch als Batteriestapler bezeichnet, und mit einem verbrennungsmotorischen Antriebssystem betrieben werden, die auch als Verbrennungsmotorstapler bezeichnet werden.

Bei verbrennungsmotorisch betriebenen Flurförderzeugen kann für den Fahrantrieb eine mechanische Leistungsübertragung mit einem hydrodynamischen Wandlergetriebe oder einem hydrostatischen Getriebe vorgesehen sein. Darüber hinaus ist bei verbrennungsmotorisch betriebenen Flurförderzeugen eine elektrische Leistungsübertragung für den Fahrantrieb bekannt, bei der ein von dem Verbrennungsmotor, z.B. einem Dieselmotor, angetriebener Generator einen elektrischen Zwischenkreis speist, aus dem ein Fahrantriebsmotor gespeist wird. In der Regel ist der Fahrantriebsmotor ein Drehstrommotor, beispielsweise Asynchronmotor, der über einen Umrichter aus dem Zwischenkreis gespeist wird.

Ein solches verbrennungsmotorisch-elektrisches Flurförderzeug bietet einfache Voraussetzungen, um einen elektrischen Energiespeicher, z.B. zum Speichern der Bremsenergie, zu integrieren. Über einen Gleichspannungswandler, der einen beliebig stellbaren, bidirektionalen elektrischen Leistungsfluss trotz unterschiedlicher Spannungspotentiale des Zwischenkreises und der elektrischen Energiespeicher ermöglicht, wird eine Verbindung zwischen dem Zwischenkreis des Fahrantriebs und den elektrischen Energiespeicher hergestellt. Der elektrische Energiespeicher kann z.B. aus Ultrakondensatoren oder Batterien bestehen. Der Zwischenkreis weist dabei im Regelfall einen Kondensator als Eingangsfilter auf.

Flurförderzeuge mit einem zuvor beschriebenen verbrennungsmotorisch-elektrischen Antriebssystem mit einem zusätzlichen elektrischen Energiespeicher können auch auf einfache Weise als hybride Flurförderzeuge betrieben werden, indem bei hohem Leistungsbedarf zusätzlich zu dem Verbrennungsmotor beispielsweise zur Versorgung des Fahrantriebsmotors oder über den als Motor betriebenen Generator zur Unterstützung des Verbrennungsmotors beim Antrieb von weiteren Aggregaten, beispielsweise einer die Arbeitshydraulik versorgenden Hydraulikpumpe, elektrische Energie dem elektrischen Energiespeicher entnommen wird. Der Verbrennungsmotor kann dann entsprechend in der Leistung kleiner ausgelegt werden.

Mit einem zusätzlichen elektrischen Energiespeicher kann ebenfalls ein Flurförderzeug mit einem verbrennungsmotorischen Antriebssystem und einem hydrostatischen Fahrantrieb oder hydrodynamischen Fahrantrieb als hybrides Fahrzeug ausgebildet werden, wenn als elektrischer Antrieb ein zusätzlicher Elektromotor als Fahrmotor oder zur Unterstützung des Verbrennungsmotors eingesetzt wird.

Als elektrischer Energiespeicher eignet sich insbesondere bei kurzen Fahrzyklen ein Ultrakondensatoren bzw. Doppelschichtkondensatoren nutzender Energiespeicher. Da die Ultrakondensatoren nur eine max. Zellenspannung von ca. 2,7 V zulassen, müssen mehrere Ultrakondensatoren in Reihe geschaltet werden, um einen geeigneten elektrischen Energiespeicher zu erhalten. Die zur Zeit eingesetzten elektrischen Energiespeicher, die aus in einem Gehäuse angeordneten Ultrakondensatoren bestehen, sind von den Schutzeinrichtungen oftmals nicht ausreichend. Durch die Reihenschaltung der Ultrakondensatoren und die gewünschte hohe Energiedichte entstehen zum einen hohe Spannungen und Gefahren, wenn es zu Kurzschlüssen, aber auch schon zu unzulässig hohen Strömen kommt. Gleichzeitig ist erwünscht, dass das Gesamtsystem nicht durch zusätzlich zu treffende Schutzmaßnahmen für den Energiespeicher, die zusätzlichen Bauraum benötigen und die Gesamtkosten erhöhen, zu komplex wird und den Service sowie die Reparatur des Energiespeichers erschweren. Der elektrische Energiespeicher soll somit für die Wartung und den Service möglichst einfach zu handhaben sein. Auch sollen Reparaturen einfach und gefahrlos durchzuführen sein.

Die genannten Probleme stellen sich auch ganz allgemein bei Fahrzeugen, mit zumindest auch elektrischem Antrieb, insbesondere Hybridantrieb.

Der vorliegenden Erfindung liegt daher die Aufgabe zugrunde, einen elektrischen Energiespeicher für ein Fahrzeug mit zumindest auch elektrischem Antrieb, insbesondere Hybridantrieb, sowie ein entsprechendes Fahrzeug zur Verfügung zu stellen, wobei der elektrische Energiespeicher eine Mehrzahl von Ultrakondensatoren aufweist, die die zuvor genannten Gefahren vermeiden und möglichst kostengünstig sowie effizient im Betrieb sind.

Diese Aufgabe wird durch einen elektrischer Energiespeicher für ein Fahrzeug mit zumindest auch elektrischem Antrieb, insbesondere Hybridantrieb, mit den Merkmalen des unabhängigen Anspruchs 1 sowie ein Fahrzeug mit zumindest auch elektrischem Antrieb, insbesondere Hybridantrieb, mit den Merkmalen des Anspruchs 10 gelöst. Vorteilhafte Weiterbildungen werden in den Unteransprüchen angegeben.

Diese Aufgabe wird durch einen elektrischer Energiespeicher für ein Fahrzeug mit zumindest auch elektrischem Antrieb, insbesondere Hybridantrieb, gelöst. Dabei weist der elektrische Energiespeicher eine Mehrzahl von Ultrakondensatoren und ein Schütz bzw. einen Schalter auf, der über eine Steuerleitung und/oder ein Steuersignal geschaltet werden kann und zumindest einen der Leistungsanschlüsse des elektrischen Energiespeichers trennen kann.

Dadurch können die Gefahren durch die im geladenen Zustand hohe Energiedichte des mit Ultrakondensatoren ausgestatten elektrischen Energiespeichers vermieden werden. Dabei kann der elektrische Energiespeicher als Modul in beliebiger Position im Fahrzeug verbaut werden. Durch das Schütz wird erreicht, dass der elektrische Energiespeicher selbst, wie auch das Fahrzeug bei Kurzschlüssen geschützt ist.

Vorteilhaft ist ein Controller integriert, der Funktionsparameter der Ultrakondensatoren wie Temperatur und/oder Spannung und/oder Ströme erfasst.

In günstiger Ausgestaltung der Erfindung kann der Controller bei erfassten Kurzschlüssen und/oder Überschreiten von zulässigen Grenzwerten für Temperatur und/oder Spannung und/oder Ströme der Ultrakondensatoren das Schütz trennen.

Es kann ein Datenbus-Controller, insbesondere ein CAN-Controller, integriert sein und über diesen können Funktionsparameter ausgelesen sowie Steuerbefehle empfangen werden.

Dies ermöglicht bei einer selbständigen Erkennung des Betriebszustands sowie Erkennung von Fehlerzuständen dem Fahrzeugsystem über die CAN-Schnittstelle entsprechende Informationen zu übergeben.

Vorteilhaft ist eine Spannungsversorgung, insbesondere für den Controller, über einen Niederspannungsanschluss vorgesehen.

Durch eine zusätzliche Spannungsversorgung über z.B. die Starterbatterie des Fahrzeugs können die Steuerungsfunktionen von Controllern unabhängig sein von der Schaltung des Schütz und/oder dem Ladungszustand der Ultrakondensatoren. Beim Abstellen des Fahrzeugs kann die Temperatur der Ultrakondensatoren weiter überwacht werden, wenn eine Nachlauffunktion zur Überwachung der Temperatursensoren, weiterer Funktionsparameterwerte oder etwa auch zur Ansteuerung eines Kühllüfters zur Kühlung des Energiespeichers vorgesehen wird.

Es kann eine Kontrollleuchte für den Ladezustand vorgesehen sein.

Dies kann insbesondere eine LED sein. Die von außen sichtbare LED zeigt einen geladenen elektrischen Energiespeicher an und erhöht dadurch die Sicherheit für Servicepersonal.

Das Schütz kann beide Pole der Leistungsanschlüsse schalten.

Dadurch ist eine vollständige Potentialtrennung möglich und wird größere Sicherheit erreicht.

In einer Weiterbildung ist eine Entladefunktion vorgesehen, die bei einem inaktiven Energiespeicher nach einer definierten Zeitdauer zu einer vollständigen Entladung der Ultrakondensatoren führt.

Diese sorgt nach einer einstellbaren Zeitdauer als Wartezeit dafür, dass ein energieloser und somit gefahrloser Transport des elektrischen Energiespeichers möglich ist. Dabei kann sich die Entladefunktion nach jedem Trennen des Schütz, nach einem Abschalten einer getrennten Spannungsversorgung für die eventuellen Controller oder auf ein spezielles Steuersignal hin aktivieren.

Die Ultrakondensatoren können Doppelschichtkondensatoren sein.

Die Aufgabe wird auch durch ein Fahrzeug mit zumindest auch elektrischem Antrieb, insbesondere Hybridantrieb, mit einem zuvor beschriebenen elektrischen Energiespeicher für die Speicherung von elektrischer Energie, insbesondere von Rekuperationsenergie wie etwa beim elektrischen Bremsen entstehender elektrischer Energie, gelöst.

Das Fahrzeug weist die schon zuvor geschilderten Vorteile auf.

Vorteilhaft kann über die Steuerleitung und/oder ein Steuersignal eine Fahrzeugsteuerung und/oder ein Notausschalter des Fahrzeugs und/oder ein Schaltschloss das Schütz ein- oder abschalten.

Dadurch kann zum Beispiel das Schütz beim Start des Fahrzeugs durch den Schaltschlüssel geschaltet werden und im abgestellten Zustand eine Spannungstrennung oder Potentialtrennung erreicht werden. Ebenso ist im Gefahrfall bei Betätigung des Notausschalters schnell ein sicherer Zustand erreichbar. Die Schaltung kann analog über eine eigene Steuerleitung erfolgen oder auch alternativ über ein Datenbussignal.

Vorteilhaft ist das Fahrzeug ein Flurförderzeug.

Weitere Vorteile und Einzelheiten der Erfindung werden anhand des in den schematischen Figuren dargestellten Ausführungsbeispiels näher erläutert. Hierbei zeigt:
- Fig. 1: einen verbrennungsmotorisch-elektrischen Antriebsstrang für ein als Flurförderzeug ausgebildetes Fahrzeug mit einem erfindungsgemäßen elektrischen Energiespeicher in einer schematischen Darstellung,
- Fig. 2: eine schematische Darstellung des verbrennungsmotorisch-elektrischen Antriebsstrang für das Fahrzeug der Fig. 1,
- Fig. 3: in perspektivischer Ansicht den elektrischen Energiespeicher der Fig. 1 und
- Fig. 4: ein Schaltbild des elektrischen Energiespeichers.

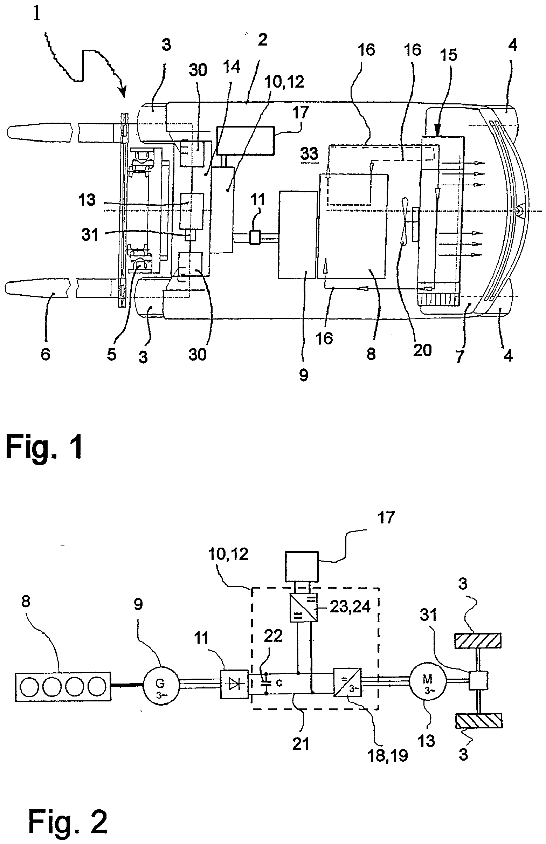

In der Fig. 1 ist ein verbrennungsmotorisch-elektrisch angetriebenes Flurförderzeug 1 in Form eines Gegengewichtsgabelstaplers als Beispiel eines Fahrzeugs mit zumindest auch elektrischem Antrieb in einer Aufsicht mit den wesentlichen Aggregaten des Antriebs dargestellt, bei dem ein erfindungsgemäßer elektrischer Energiespeicher 17 eingesetzt wird.

Das Flurförderzeug 1 weist einen Fahrzeugrahmen 2 auf, der im lastzugewandten Bereich mit zwei Antriebsrädern 3 und im lastabgewandten Bereich mit gelenkten Rädern 4 versehen ist. Am vorderen lastzugewandten Bereich des Flurförderzeugs 1 ist ein Hubgerüst 5 angeordnet, an dem ein als Lastgabel ausgebildetes Lastaufnahmemittel 6 auf- und abbewegbar angeordnet ist. Im lastabgewandten Bereich ist das Flurförderzeug 1 mit einem Gegengewicht 7 versehen.

Das Flurförderzeug 1 ist mit einem verbrennungsmotorisch-elektrischen Antriebssystem versehen, das ein elektrisches Fahrantriebsaggregat umfasst. Das Fahrantriebsaggregat weist eine Energieversorgungseinheit auf, die von einem Verbrennungsmotor 8, z.B. einem Dieselmotor, und einem mit dem Verbrennungsmotor 8 verbundenen und angetriebenen Synchrongenerator 9 gebildet ist.

Die von dem Synchrongenerator 9 erzeugte elektrische Energie wird über einen Gleichrichter 11 der in einem Gehäuse 12 integrierten Leistungselektronik 10 zugeführt, mittels der mindestens ein in oder an einer Antriebsachse 14 angeordneten elektrischer Fahrantriebsmotor 13, beispielsweise ein Asynchrondrehstrommotor, mit elektrischer Energie versorgt wird.

Der Fahrantriebsmotor 13 steht unter Zwischenschaltung eines Differentialgetriebes 31 und zweier Untersetzungsgetriebe 30 mit den Antriebsrädern 3 in Verbindung. Anstelle einer derartigen Einmotorachse, bei der ein Fahrantriebsmotor 13 beide Antriebsräder 3 antreibt, kann auch eine Zweimotorachse vorgesehen werden, bei der jeweils ein Fahrantriebsmotor unter Zwischenschaltung eines Untersetzungsgetriebes mit dem entsprechenden Antriebsrad 3 in Verbindung steht.

Der Verbrennungsmotor 8, der Generator 9 sowie das Gehäuse 12 und die Antriebsachse 14 sind hierbei zusammen mit weiteren nicht mehr dargestellten Komponenten in einem Aggregateraum 33 des Flurförderzeugs 1 angeordnet.

Der Verbrennungsmotor 8 ist mit einer Flüssigkeitskühlung versehen. Die Flüssigkeitskühlung weist einen beispielsweise im Bereich des Gegengewichts 7 angeordneten Wärmetauscher 15 auf, der mit dem Verbrennungsmotor 8 in Kühlkreisläufen 16 verbunden ist. Der Wärmetauscher 15 wird mit Hilfe eines Kühllüfters 20 von Luft durchströmt, um die von der Kühlflüssigkeit an die Umgebungsluft abgebbare Wärmemenge zu erhöhen.

Mit der Leistungselektronik 12 ist der elektrische Energiespeicher 17 verbunden. Das Flurförderzeug 1 ist ein Hybridfahrzeug, bei dem beim Bremsen über den Fahrantriebsmotor 13 Strom erzeugt wird, der in dem elektrischen Energiespeicher 17 gespeichert wird und z.B. bei großem Leistungsbedarf zusätzlich zu dem durch den Verbrennungsmotor 8 und den Synchrongenerator 9 erzeugten Strom dem Fahrantriebsmotor 13 über die Leistungselektronik 10 zugeführt wird. Dadurch kann der Verbrennungsmotor 8 kleiner ausgelegt werden und dennoch eine große Leistung z.B. beim kurzzeitigen Beschleunigen des Flurförderzeugs 1 erreicht werden.

Fig. 2 zeigt schematisch den Aufbau des Antriebssystems des Flurförderzeugs 1 aus der Fig. 1. Der Verbrennungsmotor 8 treibt den als Synchrongenerator ausgebildeten Generator 9 an und der von dem Generator 9 erzeugte Drehstrom wird in dem Gleichrichter 11 gleichgerichtet und der in dem Gehäuse 12 angeordneten Leistungselektronik 10 zugeführt. Ein Wechselrichter 18 als erster Umrichter 19 bildet aus der Gleichspannung des als Gleichspannungs-Zwischenkreis ausgebildeten Zwischenkreises 21 dreiphasigen Drehstrom variabler Frequenz, mit dem der Fahrantriebsmotor 13 gespeist wird, der über das Differentialgetriebe 31 die Antriebsräder 3 antreibt. Ein im Gehäuse 12 angeordneter Kondensator 22 dient als Eingangsfilter, der gleichzeitig auch das Eingangsfilter eines Gleichspannungswandlers 23 bildet, der als zweiter Umrichter bzw. Steller 24 in das Gehäuse 12 integriert ist und den elektrischen Energiespeicher 17 anschließt.

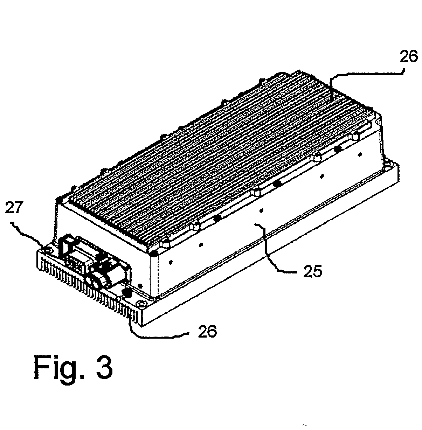

Die Fig. 3 zeigt in perspektivischer Ansicht einen elektrischen Energiespeicher 17. In einem Gehäuse 25 sind alle beschriebenen Komponenten und Bestandteile des elektrischen Energiespeichers zusammengefasst, insbesondere auch der Controller und der Datenbus-Controller. Das Gehäuse 25 weist an seiner Oberseite wie auch Unterseite Kühlrippen 26 auf. Die Kühlleistung kann durch eine integrierte Kühlung, etwa einen Lüfter oder auch einen Wärmetauscher mit einer Flüssigkeitskühlung erhöht werden, wobei z.B. der Lüfter oder der Wärmetauscher ebenfalls in das Gehäuse integriert werden können. An der Vorderseite weist das Gehäuse 25 Anschlüsse 27 für einen CAN-Bus, die Leistungsanschlüsse und weitere Leitungen auf.

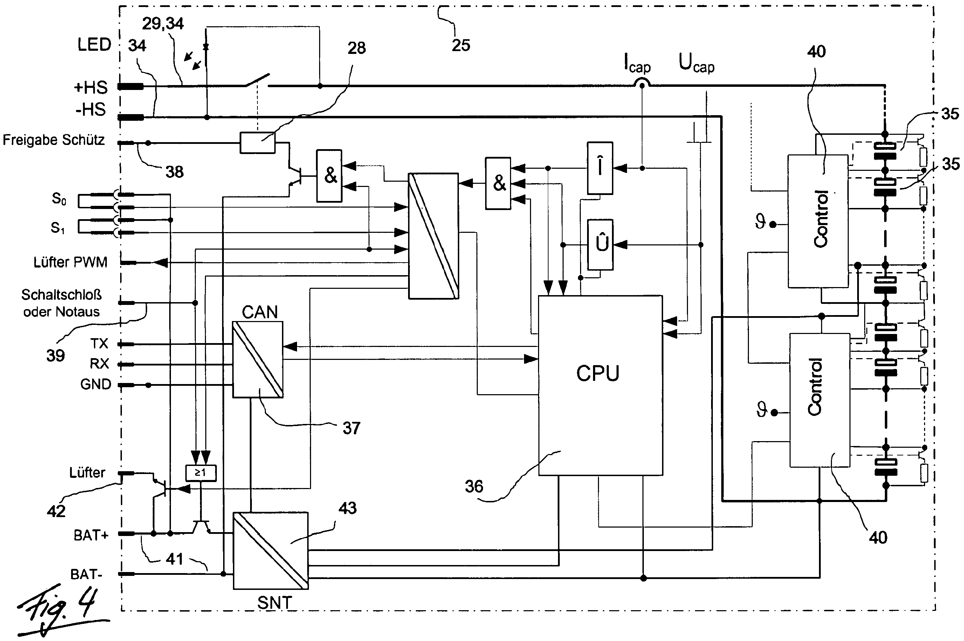

Die Fig. 4 zeigt ein Schaltbild des elektrischen Energiespeichers 17 der Fig. 1 und Fig. 3. Ein Schütz 28 kann die Plusleitung 29 von Leistungsanschlüssen 34 unterbrechen. Einheiten von Ultrakondensatoren 35 sind in Reihe geschaltet. Temperaturen der Ultrakondensatoren 35 werden einem Controller 36 zugeführt, der über einen CAN-Datenbus-Transceiver 37 mit einer Fahrzeugsteuerung verbunden ist und Informationen über den Betriebszustand des elektrischen Energiespeichers 17 mit dieser austauschen kann. Über eine Signalleitung 38 kann das Schütz 28 von einem Schaltschloss bzw. Zündschloss oder einem Notausschalter freigegeben werden, so dass das Schütz 28 nur einschalten kann, wenn dieses Signal vorliegt. Daneben kann über eine weitere Datenleitung 39 eine Betätigung des Schütz 28 durch das Schaltschloss oder den Notausschalter erfolgen. Es ist natürlich auch möglich, die Funktionen der Freigabe und des Schaltens des Schütz 28 nur über eine Datenleitung umzusetzen. Der Energiespeicher 17 ist weiterhin mit einer Gesamtspannungsmessung U_{cap} und einer Strommessung I_{cap} durch den Controller 36 versehen. Zur Temperaturüberwachung des Energiespeichers 17 sind mehrere Temperaturensensoren 40 vorgesehen, die mit dem Controller 36 in Verbindung stehen und gleichmäßig im Energiespeicher 17 verteilt sind. Zur Spannungsversorgung ist der Controller 36 und der CAN-Datenbus-Transceiver 37 mit einem Niederspannungsanschluss 41 versehen, der den Anschluss eines Schaltnetzteils 43 an die Fahrzeugbatterie des Fahrzeugs ermöglicht. Um ein Entladen der Fahrzeugbatterie zu vermeiden, kann von dem Controller 36 das Schaltnetzteil 43 ausgeschaltet werden. Der Energiespeicher 17 ist weiterhin mit einem Anschluss 42 für einen Lüfter zur äußeren Kühlung des Energiespeichers 17 versehen. Um bei abgestelltem Fahrzeug die Temperatur überwachen zu können, ist der Energiespeicher 17 mit einer Nachlauffunktion zur Überwachung der Temperatursensoren 40 versehen und zur gegebenenfalls notwendigen Ansteuerung des an den Anschluss 42 angeschlossenen Lüfters. Der Controller 36 kann weiterhin die Ausgleichsschaltung jedes Ultrakondensators 35 zu- oder abschalten. Dadurch können beliebige Betriebsstrategien gefahren werden, die der Symmetrierung und der Sicherstellung einer gleichmäßigen Alterung der Ultrakondensatoren 35 dient.

Bei dem erfindungsgemäßen Energiespeicher 17 ist der Steuerkreis mit der Überwachungsschaltung durch potential-trennende Kopplungselemente und das Schaltnetzteil 43 vom Fahrzeug-Bordnetz potential getrennt aufgebaut.

Alle beschriebenen Bauteile und Elemente, insbesondere die Schutzeinrichtungen für Temperatur, Spannung und Strom, sind in dem Gehäuse 25 als ein Modul zusammengefasst.

Der erfindungsgemäße Energiespeicher 17 ermöglicht durch das integrierte Schütz 28, dass der Energiespeicher 17 bei Kurzschlüssen und/oder Grenzwerten überschreitenden Spannungen oder Strömen durch eine Zwangsöffnung des Schütz 28 von dem Fahrzeugantriebsstrang getrennt werden kann.

Es können mehrere beschriebene elektrische Energiespeicher 17 in Reihe oder parallel eingesetzt werden, um eine Anpassung an geforderte Spannungen und Stromleistungen zu erreichen. Es ergibt sich bei dem erfindungsgemäßen elektrischen Energiespeicher 17 ein kompakter Gesamtaufbau und eine gute Handhabbarkeit für Servicepersonal sowie im Reparaturfall. Der erfindungsgemäße elektrische Energiespeicher 17 hat die Fähigkeit zur Eigendiagnose und ist einfach in ein Fahrzeugsystem zu integrieren.

Durch zwei Kodierungsbrücken, die im Kabelsatz integriert werden können, ist es möglich, bis zu vier identisch ausgeführte elektrische Energiespeicher in Reihe zu schalten. Durch die Kabelbrücken ist es im verbauten Zustand möglich, die Fehlermeldungen einzelnen elektrischen Energiespeichern genau zuzuordnen, so dass z.B. ein Servicetechniker genau erkennen kann, welcher elektrische Energiespeicher im Fehlerfall betroffen ist.

## Patentansprüche

1. Elektrischer Energiespeicher für ein Fahrzeug mit zumindest auch elektrischem Antrieb, insbesondere Hybridantrieb, wobei der elektrische Energiespeicher (17) eine Mehrzahl von Ultrakondensatoren (35) aufweist,
**dadurch gekennzeichnet,**
**dass** der elektrische Energiespeicher (17) ein Schütz (28) bzw. Schalter aufweist, der über eine Steuerleitung (38, 39) und/oder ein Steuersignal geschaltet werden kann und zumindest einen der Leistungsanschlüsse (34) des elektrischen Energiespeichers (17) trennen kann.

2. Elektrischer Energiespeicher nach Anspruch 1,
**dadurch gekennzeichnet,**
**dass** ein Controller (36) integriert ist, der Funktionsparameter der Ultrakondensatoren (35) wie Temperatur und/oder Spannung und/oder Ströme erfasst.

3. Elektrischer Energiespeicher nach Anspruch 2,
**dadurch gekennzeichnet,**
**dass** der Controller (36) bei erfassten Kurzschlüssen und/oder Überschreiten von zulässigen Grenzwerten für Temperatur und/oder Spannung und/oder Ströme der Ultrakondensatoren (35) das Schütz (28) trennen kann.

4. Elektrischer Energiespeicher nach einem der Ansprüche 1 bis 3,
**dadurch gekennzeichnet,**
**dass** ein Datenbus-Transceiver (37) sowie ein Bus-Controller, insbesondere ein CAN-Bus-Controller, integriert ist und über diesen Funktionsparameter ausgelesen sowie Steuerbefehle empfangen werden können.

5. Elektrischer Energiespeicher nach einem der Ansprüche 1 bis 4,
**dadurch gekennzeichnet,**
**dass** eine Spannungsversorgung über einen Niederspannungsanschluss vorgesehen ist.

6. Elektrischer Energiespeicher nach einem der Ansprüche 1 bis 5,
**dadurch gekennzeichnet,**
**dass** eine Kontrollleuchte für den Ladezustand vorgesehen ist.

7. Elektrischer Energiespeicher nach einem der Ansprüche 1 bis 6,
**dadurch gekennzeichnet,**
**dass** das Schütz (28) beide Pole (29) der Leistungsanschlüsse (34) schalten kann.

8. Elektrischer Energiespeicher nach einem der Ansprüche 1 bis 7,
**dadurch gekennzeichnet,**
**dass** eine Entladefunktion vorgesehen ist, die bei einem inaktiven Energiespeicher (17) nach einer definierten Zeitdauer zu einer vollständigen Entladung der Ultrakondensatoren (35) führt.

9. Elektrischer Energiespeicher nach einem der Ansprüche 1 bis 8,
**dadurch gekennzeichnet,**
**dass** die Ultrakondensatoren (35) Doppelschichtkondensatoren sind.

10. Fahrzeug mit zumindest auch elektrischem Antrieb, insbesondere Hybridantrieb, mit einem elektrischen Energiespeicher (17) nach einem der Ansprüche 1 bis 9 für die Speicherung von elektrischer Energie, insbesondere von Rekuperationsenergie wie etwa beim elektrischen Bremsen entstehender elektrischer Energie.

11. Fahrzeug nach Anspruch 10,
**dadurch gekennzeichnet,**
**dass** über die Steuerleitung (38, 39) und/oder ein Steuersignal eine Fahrzeugsteuerung und/oder ein Notausschalter des Fahrzeugs und/oder ein Schaltschloss das Schütz (28) ein- bzw. ausschalten kann.

12. Fahrzeug nach Anspruch 10 oder 11,
**dadurch gekennzeichnet,**
**dass** das Fahrzeug ein Flurförderzeug (1) ist.
